# EUROPÄISCHE PATENTSCHRIFT

(11) **EP 4 415 913 B1**
(45) Veröffentlichungstag und Bekanntmachung des Hinweises auf die Patenterteilung: **12.11.2025**
(21) Anmeldenummer: 22800697.9
(22) Anmeldetag: 14.10.2022
(51) Int. Cl.: B23D 59/00, B27B 5/22, B27D 5/00, G05B 19/409

(54) **HOLZBEARBEITUNGSMASCHINE UND -VERFAHREN**
WOODWORKING MACHINE AND METHOD
MACHINE ET PROCÉDÉ À TRAVAILLER LE BOIS

(30) Priorität: 14.10.2021 DE 202021105583 U
(43) Veröffentlichungstag der Anmeldung: 21.08.2024
(73) Patentinhaber: Altendorf GmbH, 32429 Minden (DE)
(72) Erfinder: BARNER, Karsten, 32429 Minden (DE); NEUFELD, Andreas, 32457 Porta Westfalica (DE); POHLE, Julia, 32425 Minden (DE)
(74) Vertreter: Eisenführ Speiser
(86) Internationale Anmeldenummer: PCT/EP2022/078622
(87) Internationale Veröffentlichungsnummer: WO 2023/062183

(56) Entgegenhaltungen:
- EP-A1- 3 086 193
- DE-A1- 102008 014 869
- DE-A1- 102012 206 712
- DE-U1- 29 718 636

## Beschreibung

Die Erfindung betrifft eine Holzbearbeitungsmaschine, insbesondere eine Formatkreissäge oder eine Kantenanleimmaschine, mit einem Bearbeitungswerkzeug, welches zur Bearbeitung eines der Holzbearbeitungsmaschine zugeführten Werkstücks dient.

Holzbearbeitungsmaschinen nach Art einer Formatkreissäge sind aus dem Stand der Technik bekannt. Formatkreissägen werden dazu eingesetzt, mittels eines Kreissägeblatts Werkstücke, insbesondere Plattenmaterial, Profile und dergleichen, maßgenau zuzuschneiden. Kantenanleimmaschinen sind typischerweise dazu eingerichtet, Kantenmaterial, wie beispielsweise Massivhölzer, Furnierkanten oder PVC-Kanten an Plattenmaterialien zu verkleben.

Moderne Holzbearbeitungsmaschinen weisen eine Vielzahl von Einstellmitteln auf, mit deren Hilfe Benutzer Betriebsparameter manuell einstellen können. Während eines Säge- oder Kantenanleimvorganges ist es dem Benutzer jedoch zumeist nicht möglich,

Einstellparameter der Holzbearbeitungsmaschine zu ändern, da es häufig erforderlich ist, das Werkstück mit beiden Händen zu halten und/oder zu führen. Änderungen an Einstellparametern der Holzbearbeitungsmaschine sind somit stets vor dem eigentlichen Säge- bzw. Kantenanleimvorgang vorzunehmen oder aber nach selbigem.

Wenngleich sich aus dem Stand der Technik vorbekannte Holzbearbeitungsmaschinen seit vielen Jahren bewährt haben, besteht dennoch Raum für Verbesserung in Bezug auf den Bedienkomfort und die Bedienmöglichkeiten insgesamt.

Aus DE 10 2017 103 866 A1 ist ein Verfahren zum Betreiben einer Werkstückbearbeitungsanlage sowie eine betreffende Werkstückbearbeitungsanlage bekannt. Das Dokument schlägt allgemein vor, eine Spracherkennung vorzusehen. Diese ist jedoch nicht dazu eingerichtet, während der Bearbeitung bestimmte Einstellungen an der Werkstückbearbeitungsanlage vorzunehmen.

DE 201 08 813 U1 betrifft eine Sägeguthandhabungsvorrichtung, bei dem Handhabungsroboter durch ein Spracherkennungssystem steuerbar sind. Aber auch dieses Spracherkennungssystem ist nicht dazu eingerichtet, während der Bearbeitung bestimmte Einstellungen an der Werkstückbearbeitungsanlage vorzunehmen.

Der DE 10 2012 206 712 A1 ist eine Holzbearbeitungsmaschine gemäß dem Oberbegriff des Anspruchs 1 zu entnehmen.

Vor diesem Hintergrund lag der Erfindung die Aufgabe zugrunde, eine Holzbearbeitungsmaschine der eingangs bezeichneten Art dahingehend weiterzubilden, dass die im Stand der Technik aufgefundenen Nachteile möglichst weitgehend behoben werden. Insbesondere war eine Holzbearbeitungsmaschine anzugeben, die einen verbesserten Bedienkomfort und für den Benutzer auch dann Einstellmöglichkeiten bereitstellt, wenn dieser mit beiden Händen mit der Werkstückbearbeitung befasst ist.

Erfindungsgemäß wird die Aufgabe bei einer Holzbearbeitungsmaschine der eingangs genannten Art durch eine Sprachsteuerungseinrichtung gelöst, welche dazu ausgebildet ist, um ein Werkzeugsignal zu empfangen, welches die Bewegung eines Bearbeitungswerkzeugs oder den Stillstand des Bearbeitungswerkzeugs signalisiert, und um einen Sprachbefehl zu empfangen und diesen mit in einer vorbestimmten ersten Liste an Sprachbefehlen zu vergleichen, wenn das Werkzeugsignal einen Stillstand des Bearbeitungswerkzeugs signalisiert und mit in einer vorbestimmten zweiten Liste an Sprachbefehlen zu vergleichen, wenn das Werkzeugsignal eine Bewegung des Bearbeitungswerkzeugs signalisiert und den Sprachbefehl auszuführen, wenn eine Übereinstimmung zwischen dem empfangenen Sprachbefehl und dem vorbestimmten Sprachbefehl der ersten bzw. zweiten Liste festgestellt wurde.

Hierdurch wird ein sicherer Betrieb an verletzungsgefährdenden Bearbeitungseinrichtungen ermöglicht, indem zwischen Einstellungen per Sprachbefehl bei nichtlaufendem Werkzeug und bei laufendem Werkzeug unterschieden wird. So kann verhindert werden, dass der Benutzer während eines laufenden Bearbeitungsvorgangs die Ausführung eines Sprachbefehls auslöst, der zu einer Gefährdung führt, weil dieser Sprachbefehl nur bei stillstehendem Bearbeitungswerkzeug ausgeführt werden darf. Regelmäßig umfasst die zweite Liste weniger Sprachbefehle als die erste Liste und in besonderen Fällen kann die zweite Liste vollständig leer sein, sodass während der laufenden Bearbeitung die Ausführung von Sprachbefehlen gesperrt ist.

Vorteilhafte Weiterbildungen der Erfindung sind den abhängigen Ansprüchen zu entnehmen.

Die Erfindung wird dadurch weitergebildet, dass die Holzbearbeitungsmaschine als Formatkreissäge ausgebildet ist, welche einen Werkstücktisch mit einer horizontalen Werkstückauflagefläche und einen Sägeschlitz umfasst, sowie ein Sägeaggregat mit einem Kreissägeblatt, das aus dem Sägeschlitz herausragbar angeordnet ist, und einen oberhalb der Werkstückauflagefläche beweglich angeordneten Werkstückanschlag zur seitlichen Führung des Werkstücks.

Erfindungsgemäß wird nunmehr bei einer Formatkreissäge entgegen bestehender Vorteile erstmalig vorgeschlagen, eine Sprachsteuerungseinrichtung, wie oben beschrieben, vorzusehen.

Die Erfindung wird dadurch weitergebildet, dass die Sprachsteuerungseinrichtung ein Ausgabemittel aufweist, welches dazu eingerichtet ist, Anweisungen an den Benutzer auszugeben. Mit anderen Worten ermöglicht die Sprachsteuerungseinrichtung damit nicht nur den Empfang an Sprachbefehlen und die entsprechende Verarbeitung derselben, sondern auch die Ausgabe von Anweisungen an den Benutzer. Hierdurch kann eine interaktive Sprachsteuerung erreicht werden und der Benutzer durch die Ausgabe der Anweisungen unterstützt werden.

Vorzugsweise weist die Sprachsteuerungseinrichtung eine Datenschnittstelle auf, welche dazu eingerichtet ist, drahtlos mit einem externen Gerät, insbesondere mit einem externen

Audiogerät, mono- und/oder bidirektional zu kommunizieren. Auf diese Weise kann beispielsweise vom Benutzer ohnehin zu verwendende Arbeitsschutzausrüstung in Form von Kommunikations-Headsets dazu verwendet werden, vorzugsweise drahtlos mit der Sprachsteuerungseinrichtung mittels der Datenstelle zu kommunizieren. Der Benutzer kann sich bei Verwendung derartiger drahtloser Lösungen frei um die Holzbearbeitungsmaschine bewegen und wird jedenfalls nicht durch eine eventuelle Kabelverbindung gestört. Ferner können bereits ohnehin vorhandene Kommunikations-Headsets auch zur Kommunikation mit der Holzverarbeitungsmaschine verwendet werden.

Die Erfindung wird dadurch weitergebildet, dass die Datenstelle dazu eingerichtet ist, mittels wenigstens einem der folgenden Datenübertragungsstandards zu kommunizieren: Bluetooth, drahtloses lokales Netzwerk (WLAN), Digital Enhanced Cordless Telecommunications (DECT). Die beschriebenen Datenübertragungsstandards haben sich besonders bewährt zur sicheren Datenübertragung, insbesondere von Audiodaten, bidirektional zu und von der Sprachsteuerungseinrichtung.

Die Sprachsteuerungseinrichtung kann weiterhin fortgebildet werden, indem sie einen Filter zur Ausfilterung von Hintergrundgeräuschen umfasst und/oder indem sie eine Lernfähigkeit zur Fokussierung auf Sprachbefehle eines einzelnen Benutzers aufweist, beispielsweise anhand einer Erkennung einer Stimmlage. Sprachtonhöhe, eines Sprachrythmus oder einer Sprachfärbung oder einer Zusammenstellung aus diesen Parametern. Zu diesem Zweck kann die Sprachsteuerungseinrichtung insbesondere eine Sprachartauswertung mittels künstlicher Intelligenz durchführen und hierdurch Sprachbefehle des einzigen Benutzers von anderen empfangenen Signalen differenzieren. Dies kann der Bedienungssicherheit dienen und eine irrtümliche Umsetzung von Sprachbefehlen, die beispielweise durch Ausrufe anderer Personen in einem Werkstattraum ausgelöst werden, vermeiden.

Gemäß einer bevorzugten Weiterbildung ist die Sprachsteuerungseinrichtung dazu eingerichtet, wenigstens einen der folgenden Sprachbefehle eines Benutzers zu erkennen und Steuerungssignale zur Steuerung der Holzbearbeitungsmaschine aus den Sprachbefehlen zu generieren: Ersteingabe und/oder Änderung von Einstellparametern von Achsen der Holzbearbeitungsmaschine, insbesondere von Maßwerten der Achsen, Betätigung eines Spannwerkzeugs der Holzbearbeitungsmaschine, insbesondere eines elektrischen Spannwerkzeugs, Betätigung eines Druckluft-Bereitstellungsmittels, Betätigung eines Absaugmittels, Freilegen eines Werkstücks, insbesondere durch Ausrücken eines Parallelanschlags, an dem das Werkstück anliegt.

Die genannten Sprachbefehle zur Steuerung der betreffenden Eigenschaften haben sich als besonders geeignet zur Verwendung mit einer Sprachsteuerungseinrichtung erwiesen. Die genannten Sprachbefehle betreffen typischerweise keine hochsicherheitsrelevanten Parameter, wie beispielsweise den Betrieb des Sägeblattes, Sägeblattdrehzahlen, und dergleichen, entlasten den Benutzer jedoch signifikant von andernfalls manuell durchzuführenden Einstellarbeiten.

Die Erfindung wird dadurch weitergebildet, dass die Holzbearbeitungsmaschine eine grafische Benutzerschnittstelle aufweist und wobei die Sprachsteuerungseinrichtung dazu eingerichtet ist, die folgenden Sprachbefehle eines Benutzers zu erkennen und auf Basis der Sprachbefehle die Benutzerschnittstelle wie folgt zu steuern: Auswahl von und/oder Navigation innerhalb von mittels der Benutzerschnittstelle dargestellten Bedienmenüs, Sprachsteuerung eines Benutzer-Unterstützungssystems, insbesondere eines Zuschnittoptimierungs-Unterstützungssystems. In Zusammenschau mit einer grafischen Benutzerschnittstelle kann die Sprachsteuerungseinrichtung mit anderen Worten dazu verwendet werden, die Benutzerschnittstelle zu steuern, beispielsweise in Form von Menüführungen oder durch die Sprachsteuerung eines Unterstützungssystems, welches beispielsweise der Zuschnittoptimierung dient.

Gemäß einer bevorzugten Ausführungsform ist die Sprachsteuerungseinrichtung dazu eingerichtet, wenigstens einen Anschlag und/oder einen Bearbeitungsparameter der Holzbearbeitungsmaschine nach Spracheingabe eines zu bearbeitenden Materials selbsttätig einzustellen. Somit ist nicht länger erforderlich, dass der Benutzer einen konkreten Zahlenwert erinnert und manuell an der Holzbearbeitungsmaschine einstellt, sondern vielmehr reicht die bloße Nennung des zu bearbeitenden Materials dazu aus, um Bearbeitungsparameter der Holzbearbeitungsmaschine, beispielsweise eine Schnittgeschwindigkeit (im Falle einer Kreissäge beispielsweise eine Sägeblattdrehzahl) einzustellen, oder durch Spracheingabe einer Werkstückbezeichnung oder eines Bearbeitungsschritts Anschläge der Holzbearbeitungsmaschine, auf Basis von hinterlegten Werten auf den gewünschten Wert einzustellen. Hierdurch wird der Benutzer mental entlastet und das Risiko von Fehleinstellungen reduziert.

Neben dieser Option einer Einstellung von Bearbeitungsparametern oder Anschlagpositionen vor der Bearbeitung des Werkstücks ist es auch vorteilhaft, wenn mittels der Sprachsteuerung während der Bearbeitung bestimmte Einstellungen vorgenommen werden können. So ist es beispielsweise oftmals kurz vor Ende eines Bearbeitungsvorgangs wünschenswert, einen Bearabeitungsparameter oder eine Anschlagposition zu verändern, um ein gutes Bearbeitungsergebnis zu erhalten oder um eine Verletzungsgefahr des Bedieners zu verringern. So kann beispielsweise die Schnittgeschwindigkeit oder die Schnittzustellung (der Vorschub) mittels Sprachbefehl kurz vor Ende des Bearbeitungsvorgangs erhöht oder verringert werden. Es kann weiterhin kurz vor Ende ein Anschlag, wie beispielsweise ein Parallelanschlag einer Kreissäge, mittels Sprachbefehl ausgerückt werden, um eine Verletzungsgefahr durch einen Kick-Back-Effekt an dem zwischen Werkzeug und Anschlag geklemmten Werkstück zu verhindern.

Die Erfindung wird dadurch weitergebildet, dass die Sprachsteuerungseinrichtung dazu eingerichtet ist, Handlungsempfehlungen an den Benutzer auszugeben. Derartige Handlungsempfehlungen unterstützen den Benutzer bei der Bearbeitung der gewünschten Werkstücke und reduzieren den Schulungsaufwand für neue Bearbeiter. Gemäß einer bevorzugten Ausführungsform umfassen die Handlungsempfehlungen wenigstens eines der folgenden: Handlungsempfehlungen betreffend das zu bearbeitende Werkstück, Handlungsempfehlungen betreffend den Betrieb der Holzbearbeitungsmaschine, Ausbildungsinformation, insbesondere betreffend Maßnahmen zur Erhöhung der Arbeitssicherheit und/oder Lage des Werkstücks. Mit anderen Worten wird es durch die Ausgabe der Handlungsempfehlungen auch für weniger geschulte Benutzer möglich, in kurzer Zeit und ohne hohen Schulungsbedarf Werkstücke mit hoher Effizienz mittels der Holzbearbeitungsmaschine bearbeiten zu können.

Vorzugsweise ist die Sprachsteuerungseinrichtung dazu eingerichtet, Handlungsempfehlungen in Abhängigkeit eines oder mehrerer Benutzerzustände auszugeben, wobei die Benutzerzustände insbesondere mit einem Ausbildungsgrad der Benutzer korrelieren. Mit anderen Worten ist es der Sprachsteuerungseinrichtung damit möglich, selektiv auf unterschiedliche Ausbildungszustände der Benutzer zu reagieren. Wird beispielsweise ein Benutzerzustand eines erfahrenen Facharbeiters ausgewählt, so werden vorzugsweise lediglich dann Handlungsempfehlungen ausgegeben, wenn beispielsweise ein selten verwendetes oder komplexes Werkstück bearbeitet werden soll. Wird beispielsweise ein Benutzerzustand eines unerfahrenen Benutzers ausgewählt, so wird vorzugsweise die Anzahl der Handlungsempfehlungen deutlich erhöht und auch für routinemäßige Tätigkeiten eine Handlungsempfehlung ausgegeben, die sich für den erfahrenen Benutzer allerdings störend auswirken würde. Insoweit ermöglicht die Auswahl der Benutzerzustände eine bedarfsweise Dosierung der Anzahl der Handlungsempfehlungen in Abhängigkeit vom Ausbildungsgrad der Benutzer.

Die Erfindung wird dadurch weitergebildet, dass die Holzbearbeitungsmaschine dazu eingerichtet ist, einen Fehlerzustand zu detektieren, wobei die Sprachsteuerungseinrichtung dazu eingerichtet ist, in Abhängigkeit von dem Fehlerzustand Anweisung an den Benutzer auszugeben und/oder Sprachbefehle des Benutzers zu verarbeiten. Fehlerzustände der Maschine können somit über eine akustische Ausgabe an den Benutzer übermittelt werden. Hierdurch erfährt der Benutzer auch dann von eventuellen Fehlerzuständen, wenn sein Blick beispielsweise gerade nicht auf die grafische Benutzeroberfläche gerichtet ist. Darüber hinaus kann die Sprachsteuerungseinrichtung dazu verwendet werden, vom Benutzer Informationen abzufragen, oder Informationen an den Benutzer auszugeben, wie mit dem Fehlerzustand umzugehen ist.

Die Erfindung wird dadurch weitergebildet, dass die Anweisungen die Überprüfung von Einstellparametern umfassen, insbesondere eine mehrschritte Überprüfung von Einstellparametern nach Art eines Fehlerbaumes. Mit anderen Worten ist die Sprachsteuerungseinrichtung dazu eingerichtet, den Benutzer durch eine Fehlerlösungslogik sprachbasiert und nach Art eines Fehlerbaumes zu führen. Hierdurch können auftretende Fehlerzustände häufig schneller behoben werden, weil die Konsultation eines Handbuches, oder dergleichen, entbehrlich sein kann.

Gemäß einer bevorzugten Weiterbildung ist die Sprachsteuerungseinrichtung dazu eingerichtet, einen Kontakt zu einem Servicetechniker herzustellen. Hierdurch wird beispielsweise für Fälle, bei denen der Fehler nicht detektiert oder behoben werden kann, direkt ein Kontakt zu einem Servicetechniker hergestellt, ohne dass beispielsweise eine Servicetelefonnummer identifiziert und der Techniker mittels eines Mobilgerätes, oder dergleichen, kontaktiert werden muss. Insbesondere ist die Holzbearbeitungsmaschine insoweit auch dazu eingerichtet, dem Techniker Betriebsparameter der Holzbearbeitungsmaschine zur Verfügung zu stellen.

Die Erfindung wird dadurch weitergebildet, dass die Holzbearbeitungsmaschine als Kantenanleimmaschine ausgebildet ist, und die Sprachsteuerungseinrichtung dazu eingerichtet ist, wenigstens eine der folgenden Sprachbefehle eines Benutzers zu erkennen und Steuerungssignale zur Steuerung der Kantenanleimmaschine aus den Sprachbefehlen zu generieren: Auswahl einer Betriebsart der Kantenanleimmaschine, insbesondere Leimbecken und/oder Airtronicbetrieb, wobei der Airtronicbetrieb insbesondere eine Temperaturauswahl umfasst, Einstellung einer Fügefrässtärke, Einstellung einer Kantenstärke, Einstellung einer Werkstückhöhe, individuelles Zu- und/oder Abschalten einzelner Fräsen der Kantenanleimmaschine, Einstellen einer Frässtärke der Kantenanleimmaschine.

Die obige Konfiguration der Sprachsteuerungseinrichtung macht sich die Erkenntnis zunutze, dass die genannten Sprachbefehle besonders hilfreich zur Verbesserung des Betriebskomforts einer Kantenanleimmaschine sind, wenn diese in Form von Sprachbefehlen an die Maschine übermittelt werden können. Hierdurch wird der Benutzer im Vergleich zur manuellen Eingabe entlastet und insgesamt die Bearbeitungseffizienz gesteigert.

Weitere Merkmale und Vorteile der Erfindung ergeben sich aus den beigefügten Ansprüchen und der nachfolgenden Beschreibung, in der Ausführungsbeispiele anhand schematischer Zeichnungen im Einzelnen erläutert werden.

Im Einzelnen zeigen:
Fig. 1 ein Ausführungsbeispiel einer als Formatkreissäge ausgebildeten Holzbearbeitungsmaschine mit einer Sprachsteuerungseinrichtung in einer perspektivischen Darstellung;
Fig. 2 ein Ausführungsbeispiel einer grafischen Benutzerschnittstelle einer erfindungsgemäßen Holzbearbeitungsmaschine;
Fig. 3 ein Ausführungsbeispiel einer Handlungsempfehlung einer erfindungsgemäßen Holzbearbeitungsmaschine in einer schematischen Darstellung; und
Fig. 4 ein Ausführungsbeispiel einer erfindungsgemäßen Holzbearbeitungsmaschine, welche als Kantenanleimmaschine ausgebildet ist in einer schematischen Darstellung.

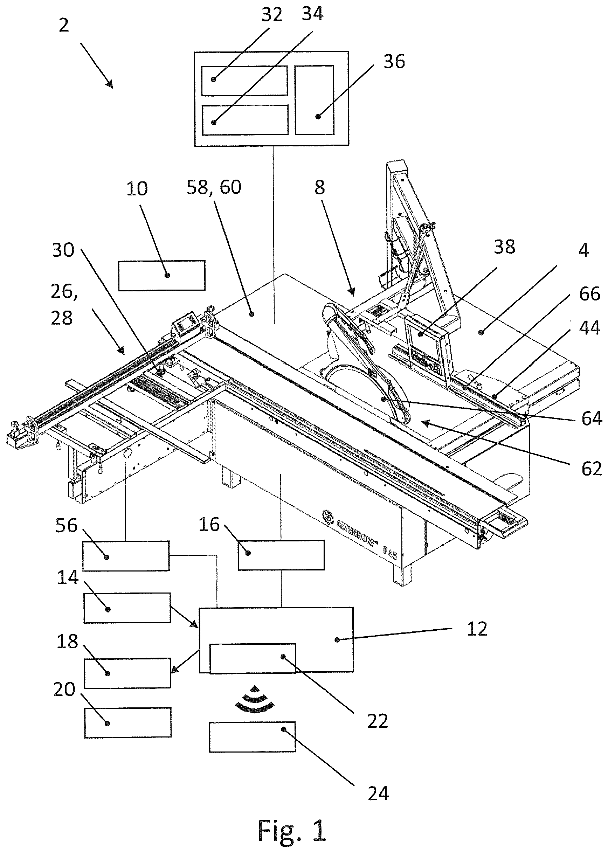

Fig. 1 zeigt eine Holzbearbeitungsmaschine 2, die als Formatkreissäge 4 ausgebildet ist. Die Formatkreissäge 4 weist ein Bearbeitungswerkzeug 8 auf. Das Bearbeitungswerkzeug 8 ist zur Bearbeitung eines der Formatkreissäge 4 zugeführten Werkstücks 10 eingerichtet. Die Formatkreissäge 4 weist ferner eine Sprachsteuerungseinrichtung 12 auf. Die Sprachsteuerungseinrichtung 12 ist dazu eingerichtet, Sprachbefehle 14 eines Benutzers der Formatkreissäge 4 zu verarbeiten und Steuerungssignale 16 zur Steuerung der Formatkreissäge 4 aus den Sprachbefehlen 14 zu generieren. Die Formatkreissäge 4 ist ferner dazu eingerichtet, auf Basis der Steuerungssignale 16 gesteuert zu werden.

Die Formatkreissäge 4 weist ein Werkstücktisch 58 auf. Der Werkstücktisch 58 weist eine horizontale Auflagefläche 60 und ein Sägeschlitz 62 auf. Die Formatkreissäge 4 weist ferner ein Sägeaggregat mit einem Kreissägeblatt 64 auf, das aus dem Sägeschlitz 62 herausragbar angeordnet ist. Oberhalb der Werkstückauflagefläche 60 ist ein Werkstückanschlag 44 beweglich angeordnet. Der Werkstückanschlag 44 dient zur seitlichen Führung des Werkstücks 10.

Die Sprachsteuerung 12 weist ein Ausgabemittel 18 auf, welches dazu eingerichtet ist, Anweisungen 20 an den Benutzer auszugeben. Die Sprachsteuerungseinrichtung 12 weist ferner eine Datenschnittstelle 22 auf, welche dazu eingerichtet ist, drahtlos mit einem externen Gerät 24, insbesondere mit einem externen Audiogerät 24, mono- und/oder bidirektional zu kommunizieren. Die Datenschnittstelle 22 ist dazu eingerichtet, mittels wenigstens einem der folgenden Datenübertragungsstandards zu kommunizieren: Bluetooth, drahtloses lokales Netzwerk (WLAN), Digital Enhanced Cordless Telecommunications (DECT).

Die Sprachsteuerungseinrichtung 12 ist ferner dazu eingerichtet, wenigstens einen der folgenden Sprachbefehle 14 eines Benutzers zu erkennen und Steuerungssignale 16 zur Steuerung der Formatkreissäge 4 aus den Sprachbefehlen 14 zu generieren: Ersteingabe und/oder Änderung von Einstellparametern 26 von Achsen 28 der Formatkreissäge 4, insbesondere von Maßwerten der Achsen 28, Betätigung eines Spannwerkzeugs 30 der Formatkreissäge 4, insbesondere eines elektrischen Spannwerkzeugs 30, Betätigung eines Druckluft-Bereitstellungsmittels 32, Betätigung eines Absaugmittels 34, und/oder Freilegen des Werkstücks 10.

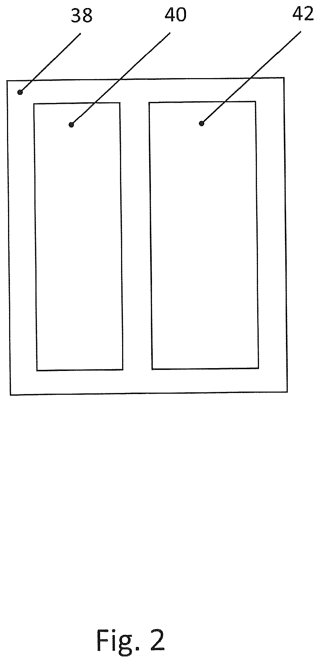

Die Formatkreissäge 4 weist ferner eine grafische Benutzerschnittstelle 38 auf. Die Sprachsteuerung 12 ist dazu eingerichtet, Sprachbefehle 14 eines Benutzers zu erkennen und auf Basis der Sprachbefehle 14 die Benutzerschnittstelle 38 wie in Fig. 2 gezeigt zu steuern.

Die Sprachsteuerungseinrichtung 12 ist dazu eingerichtet, wenigstens einen Anschlag 44 der Formatkreissäge 4 nach Spracheingabe eines zu bearbeitenden Materials selbsttätig einzustellen. Die Holzbearbeitungsmaschine 2, insbesondere die Formatkreissäge 4, ist dazu eingerichtet, einen Fehlerzustand 56 zu detektieren. Die Sprachsteuerungseinrichtung 12 ist dazu eingerichtet, in Abhängigkeit von dem Fehlerzustand 56 Anweisungen 20 an den Benutzer auszugeben und/oder Sprachbefehle 14 des Benutzers zu verarbeiten.

Die Anweisungen 20 umfassen die Überprüfung von Anstellparametern 26, insbesondere eine mehrschrittige Überprüfung von Einstellparametern nach Art eines Fehlerbaums. Die Sprachsteuerungseinrichtung 12 ist ferner dazu eingerichtet, einen Kontakt zu einem Servicetechniker herzustellen.

Fig. 2 zeigt eine schematische Darstellung der Benutzerschnittstelle 38. Die Benutzerschnittstelle 38 weist ein Bedienmenü 40 sowie ein Benutzer-Unterstützungssystem 42 nach Art eines Zuschnittoptimierungs-Unterstützungssystems 42 auf. Die Sprachsteuerungseinrichtung 12 ist dazu eingerichtet, Sprachbefehle 14 eines Benutzers zu erkennen, die darauf gerichtet sind, Bedienmenüs 40 auszuwählen und/oder innerhalb der Bedienmenüs 40 zu navigieren und/oder eine Sprachsteuerung des Benutzer-Unterstützungssystems 42 durchzuführen.

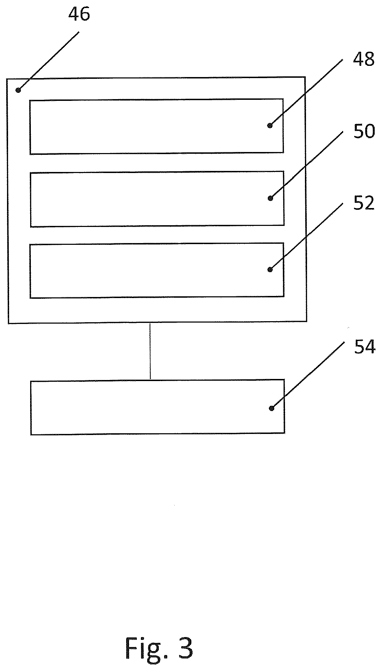

Fig. 3 betrifft eine schematische Darstellung von Handlungsempfehlungen 46. Die Handlungsempfehlungen 46 umfassen Handlungsempfehlungen 48 betreffend das zu bearbeitende Werkstück 10, Handlungsempfehlungen 50 betreffend den Betrieb der Holzbearbeitungsmaschine 2, und/oder Ausbildungsinformationen 52, insbesondere betreffend Maßnahmen zur Erhöhung der Arbeitssicherheit und/oder Lage eines Werkstücks 10. Die Sprachsteuerungseinrichtung 12 ist dazu eingerichtet, Handlungsempfehlungen 46 in Abhängigkeit eines oder mehrerer Benutzerzustände 54 auszugeben, wobei die Benutzerzustände 54 insbesondere mit einem Ausbildungsgrad der Benutzer korrelieren.

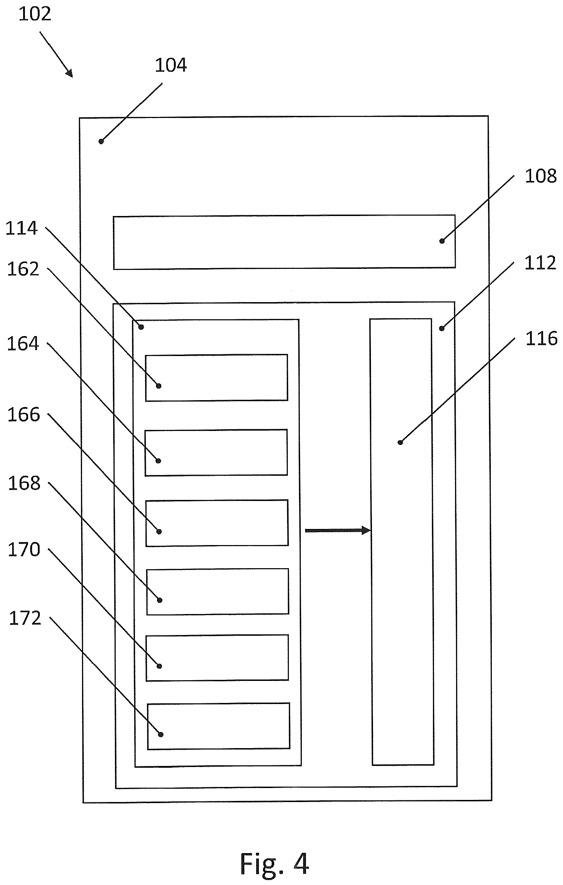

Fig. 4 zeigt eine schematische Darstellung einer Holzbearbeitungsmaschine 102, die als Kantenanleimmaschine 104 ausgebildet ist. Die Kantenanleimmaschine 104 weist ein Bearbeitungswerkzeug 108 sowie eine Sprachsteuerungseinrichtung 112 auf. Die Sprachsteuerungseinrichtung 112 ist dazu eingerichtet, wenigstens einen der folgenden Sprachbefehle 114 eines Benutzers zu erkennen und Steuerungssignale 116 zur Steuerung der Kantenanleimmaschine 104 aus den Sprachbefehlen 114 zu generieren: Auswahl einer Betriebsart 162 der Kantenanleimmaschine 104, insbesondere Leimbecken und/oder Airtronicbetrieb, wobei der Airtronicbetrieb insbesondere eine Temperaturauswahl umfasst, Einstellung einer Fügefrässtärke 164, Einstellung einer Kantenstärke 166, Einstellung einer Werkstückhöhe 168, individuelles Zu- und/oder Abschalten einzelner Fräsen 170 der Kantenanleimmaschine 104, Einstellen einer Frässtärke 172 der Kantenanleimmaschine 104.

### Bezugszeichenliste

- 2: Holzbearbeitungsmaschine
- 4: Formatkreissäge
- 8: Bearbeitungswerkzeug
- 10: Werkstück
- 12: Sprachsteuerungseinrichtung
- 14: Sprachbefehl
- 16: Steuerungssignal
- 18: Ausgabemittel
- 20: Anweisungen an den Benutzer
- 22: Datenschnittstelle
- 24: externes Gerät (Audiogerät)
- 26: Einstellparameter
- 28: Achse
- 30: Spannwerkzeug
- 32: Druckluft-Bereitstellungsmittel
- 34: Absaugmittel
- 36: Parallelanschlag
- 38: grafische Benutzerschnittstelle
- 40: Bedienmenü
- 42: Zuschnittoptimierungs-Unterstützungssystem
- 44: Werkstückanschlag
- 46: Handlungsempfehlung
- 48: Handlungsempfehlung betreffend das zu bearbeitende Werkstück,
- 50: Handlungsempfehlung betreffend den Betrieb der Holzbearbeitungsmaschine
- 52: Ausbildungsinformation
- 54: Benutzerzustände
- 56: Fehlerzustand
- 58: Werkstücktisch
- 60: Werkstückauflagefläche
- 62: Sägeschlitz
- 64: Kreissägeblatt
- 66: Werkstückanschlagfläche
- 102: Holzbearbeitungsmaschine
- 104: Kantenanleimmaschine
- 108: Bearbeitungswerkzeug
- 112: Sprachsteuerungseinrichtung
- 114: Sprachbefehle
- 116: Steuerungssignale
- 162: Betriebsart der Kantenanleimmaschine
- 164: Fügefrässtärke
- 166: Kantenstärke
- 168: Werkstückhöhe
- 170: Fräse
- 172: Frässtärke

## Patentansprüche

1. Holzbearbeitungsmaschine (2, 102), insbesondere Formatkreissäge (4) oder Kantenanleimmaschine (104), mit einem Bearbeitungswerkzeug (8, 108), welches zur Bearbeitung eines der Holzbearbeitungsmaschine (2, 102) zugeführten Werkstücks (10) dient, und einer Sprachsteuerungseinrichtung (12, 112), welche dazu eingerichtet ist, Sprachbefehle (14, 114) eines Benutzers der Holzbearbeitungsmaschine (2, 102) zu verarbeiten und Steuerungssignale (16, 116) zur Steuerung der Holzbearbeitungsmaschine (2, 102) aus den Sprachbefehlen (14, 114) zu generieren,
wobei die Holzbearbeitungsmaschine (2, 102) dazu eingerichtet ist, auf Basis der Steuerungssignale (16, 116) gesteuert zu werden,
**dadurch gekennzeichnet, dass** die Sprachsteuerungseinrichtung dazu ausgebildet ist, um ein Werkzeugsignal zu empfangen, welches die Bewegung eines Bearbeitungswerkzeugs oder den Stillstand des Bearbeitungswerkzeugs signalisiert, und um einen Sprachbefehl zu empfangen und diesen mit in einer vorbestimmten ersten Liste an Sprachbefehlen zu vergleichen, wenn das Werkzeugsignal einen Stillstand des Bearbeitungswerkzeugs signalisiert und mit in einer vorbestimmten zweiten Liste an Sprachbefehlen zu vergleichen, wenn das Werkzeugsignal eine Bewegung des Bearbeitungswerkzeugs signalisiert und den Sprachbefehl auszuführen, wenn eine Übereinstimmung zwischen dem empfangenen Sprachbefehl und dem vorbestimmten Sprachbefehl der ersten bzw. zweiten Liste festgestellt wurde.

2. Holzbearbeitungsmaschine (2) nach Anspruch 1,
wobei die Holzbearbeitungsmaschine (2) als Formatkreissäge (4) ausgebildet ist, welche umfasst:
- einen Werkstücktisch (58) mit einer horizontalen Werkstückauflagefläche (60) und einem Sägeschlitz (62),
- einem Sägeaggregat mit einem Kreissägeblatt (64), das aus dem Sägeschlitz (62) herausragbar angeordnet ist,
- ein oberhalb der Werkstückauflagefläche (60) beweglich angeordneter Werkstückanschlag (44) zur seitlichen Führung des Werkstücks (10).

3. Holzbearbeitungsmaschine (2) nach Anspruch 1 oder 2,
wobei die Sprachsteuerungseinrichtung (12) ein Ausgabemittel (18) aufweist, welches dazu eingerichtet ist, Anweisungen (20) an den Benutzer auszugeben.

4. Holzbearbeitungsmaschine (2) nach einem der vorstehenden Ansprüche,
wobei die Sprachsteuerungseinrichtung (12, 112) eine Datenschnittstelle (22) aufweist, welche dazu eingerichtet ist, drahtlos mit einem externen Gerät (24), insbesondere mit einem externen Audiogerät (24), mono- und/oder bidirektional zu kommunizieren, insbesondere wobei die Datenschnittstelle (22) dazu eingerichtet ist, mittels wenigstens einem der folgenden Datenübertragungsstandards zu kommunizieren:
- Bluetooth,
- drahtloses lokales Netzwerk (WLAN),
- Digital Enhanced Cordless Telecommunications (DECT).

5. Holzbearbeitungsmaschine (2) nach einem der vorstehenden Ansprüche,
wobei die Sprachsteuerungseinrichtung (12, 112) dazu eingerichtet ist, wenigstens einen der folgenden Sprachbefehle (14) eines Benutzers zu erkennen und Steuerungssignale (16) zur Steuerung der Holzbearbeitungsmaschine (2) aus den Sprachbefehlen (14) zu generieren:
- Ersteingabe und/oder Änderung von Einstellparametern (26) von Achsen (28) der Holzbearbeitungsmaschine (2), insbesondere von Maßwerten der Achsen (28),
- Betätigung eines Spannwerkzeugs (30) der Holzbearbeitungsmaschine (2), insbesondere eines elektrischen Spannwerkezugs (30),
- Betätigung eines Druckluft-Bereitstellungsmittels (32),
- Betätigung eines Absaugmittels (34),
- Freilegen eines Werkstückes (10), insbesondere durch Ausrücken eines Parallelanschlags, an dem das Werkstück anliegt (36),

6. Holzbearbeitungsmaschine (2) nach einem der vorstehenden Ansprüche,
wobei die Holzbearbeitungsmaschine (2) eine grafische Benutzerschnittstelle (38) aufweist und wobei die Sprachsteuerungseinrichtung (12) dazu eingerichtet ist, die folgenden Sprachbefehle (14) eines Benutzers zu erkennen und auf Basis der Sprachbefehle (14) die Benutzerschnittstelle (38) wie folgt zu steuern:
- Auswahl von und/oder Navigation innerhalb von mittels der Benutzerschnittstelle (38) dargestellten Bedienmenüs (40),
- Sprachsteuerung eines Benutzer-Unterstützungssystems (42), insbesondere eines Zuschnittoptimierungs-Unterstützungssystems (42).

7. Holzbearbeitungsmaschine (2) nach einem der vorstehenden Ansprüche,
wobei die Sprachsteuerungseinrichtung dazu eingerichtet ist, wenigstens einen Anschlag und/oder einen Bearbeitungsparameter der Holzbearbeitungsmaschine nach Spracheingabe einer Kennung für ein zu bearbeitendes Material oder ein zu bearbeitendes Werkstück selbsttätig einzustellen.

8. Holzbearbeitungsmaschine (2) nach einem der vorstehenden Ansprüche,
wobei die Sprachsteuerungseinrichtung (12) dazu eingerichtet ist, Handlungsempfehlungen (46) an den Benutzer auszugeben,
insbesondere wobei die Handlungsempfehlungen (46) wenigstens eine der folgenden umfassen:
- Handlungsempfehlungen (48) betreffend das zu bearbeitende Werkstück (10),
- Handlungsempfehlungen (50) betreffend den Betrieb der Holzbearbeitungsmaschine (2),
- Ausbildungsinformationen (52), insbesondere betreffend Maßnahmen zur Erhöhung der Arbeitssicherheit und /oder Lage des Werkstücks (10).

9. Holzbearbeitungsmaschine (2) nach einem der vorstehenden Ansprüche,
wobei die Sprachsteuerungseinrichtung (12) dazu eingerichtet ist, Handlungsempfehlungen (46) in Abhängigkeit eines oder mehrere Benutzerzustände (54) auszugeben, wobei die Benutzerzustände (54) insbesondere mit einem Ausbildungsgrad der Benutzer korrelieren,
und/oder
wobei die Holzbearbeitungsmaschine (2) dazu eingerichtet ist, einen Fehlerzustand (56) zu detektieren und wobei die Sprachsteuerungseinrichtung (12) dazu eingerichtet ist, in Abhängigkeit von dem Fehlerzustand (56) Anweisungen (20) an den Benutzer auszugeben und/oder Sprachbefehle (14) des Benutzers zu verarbeiten,
insbesondere wobei die Anweisungen (20) die Überprüfung von Einstellparametern (26) umfassen, insbesondere eine mehrschrittige Überprüfung von Einstellparametern (26) nach Art eines Fehlerbaumes.

10. Holzbearbeitungsmaschine (2) nach einem der vorstehenden Ansprüche,
wobei die Sprachsteuerungseinrichtung (12) dazu eingerichtet ist, einen Kontakt zu einem Servicetechniker herzustellen.

11. Holzbearbeitungsmaschine (102) nach einem der vorstehenden Ansprüche,
wobei die Holzbearbeitungsmaschine (102) als Kantenanleimmaschine (104) ausgebildet ist, und die Sprachsteuerungseinrichtung (112) dazu eingerichtet ist, wenigstens einen der folgenden Sprachbefehle (114) eines Benutzers zu erkennen und Steuerungssignale (116) zur Steuerung der Kantenanleimmaschine (104) aus den Sprachbefehlen (114) zu generieren:
- Auswahl einer Betriebsart (162) der Kantenanleimmaschine (104), insbesondere Leimbecken- und/oder Airtronicbetrieb, wobei der Airtronicbetrieb insbesondere eine Temperaturauswahl umfasst,
- Einstellung einer Fügefrässtärke (164),
- Einstellung einer Kantenstärke (166),
- Einstellung einer Werkstückhöhe (168),
- Individuelles Zu- und/oder Abschalten einzelner Fräsen (170) der Kantenanleimmaschine (104),
- Einstellen einer Frässtärke (172) der Kantenanleimmaschine (104).

12. Holzbearbeitungsmaschine (102) nach einem der vorstehenden Ansprüche,
wobei die Sprachsteuerungseinrichtung einen Filter zur Ausfilterung von Hintergrundgeräuschen umfasst und/oder eine Lernfähigkeit zur Fokussierung auf Sprachbefehle eines einzelnen Benutzers aufweist, beispielsweise anhand einer Erkennung einer Stimmlage, Sprachtonhöhe, eines Sprachrythmus oder einer Sprachfärbung oder einer Zusammenstellung aus diesen Parametern,

13. Holzbearbeitungsmaschine (102) nach einem der vorstehenden Ansprüche,
wobei die Sprachsteuerungseinrichtung ausgebildet ist, um während der Bearbeitung bestimmte Einstellungen vorzunehmen.

14. Holzbearbeitungsverfahren wobei eine Holzbearbeitungsmaschine (102) nach einem der vorstehenden Ansprüche verwendet wird, bei dem mit einem Bearbeitungswerkzeug (8, 108) der Holzbearbeitungsmaschine (2, 102) ein zugeführtes Werkstück (10) bearbeitet wird, **gekennzeichnet durch** mindestens einen Sprachsteuerungsschritt (12, 112), in dem ein Sprachbefehl (14, 114) eines Benutzers der Holzbearbeitungsmaschine (2, 102) empfangen und verarbeitet wird und ein Steuerungssignal (16, 116) zur Steuerung der Holzbearbeitungsmaschine (2, 102) aus den Sprachbefehlen (14, 114) generiert wird, und in dem die Holzbearbeitungsmaschine (2, 102) auf Basis des Steuerungssignals (16, 116) gesteuert wird.

15. Verwendung einer Sprachsteuerung zur Steuerung einer Holzbearbeitungsmaschine, insbesondere zur Einstellung eines Bearbeitungsparameters oder einer Position eines Werkstückanschlags, an einer Holzbearbeitungsmaschine nach einem der Ansprüche 1-13.

## Claims

1. Woodworking machine (2, 102), in particular a sliding table saw (4) or edge banding machine (104), with a tool (8, 108) which serves to tool a workpiece (10) fed to the woodworking machine (2, 102), and a voice control device (12, 112) which is designed to process voice commands (14, 114) from a user of the woodworking machine (2, 102) and to generate control signals (16, 116) for controlling the woodworking machine (2, 102)from the voice commands (14, 114), wherein the woodworking machine (2, 102) is designed to be controlled on the basis of the control signals (16, 116),
**characterized in that** the voice control device is designed to receive a tool signal which signals the movement of a tool or the standstill of the tool, and to receive a voice command and compare it with a predetermined first list of voice commands if the tool signal signals a standstill of the machining tool, and to compare it with a predetermined second list of voice commands if the tool signal signals a movement of the machining tool, and to execute the voice command if a match between the received voice command and the predetermined voice command of the first or second list has been detected.

2. Woodworking machine (2) according to claim 1,
wherein the woodworking machine (2) is designed as a sliding table saw (4), which comprises:
- a workpiece table (58) with a horizontal workpiece support surface (60) and a saw slot (62),
- a saw unit with a circular saw blade (64) that is arranged so that it can protrude from the saw slot (62),
- a workpiece stop (44) arranged movably above the workpiece support surface (60) for lateral guidance of the workpiece (10).

3. Woodworking machine (2) according to claim 1 or 2,
wherein the voice control device (12) has an output means (18) which is designed to output instructions (20) to the user.

4. Woodworking machine (2) according to one of the preceding claims,
wherein the voice control device (12, 112) has a data interface (22) which is designed to communicate wirelessly with an external device (24), in particular with an external audio device (24), mono- and/or bidirectionally,
in particular wherein the data interface (22) is adapted to communicate using at least one of the following data transmission standards:
- Bluetooth,
- wireless local area network (WLAN),
- Digital Enhanced Cordless Telecommunications (DECT).

5. Woodworking machine (2) according to one of the preceding claims,
wherein the voice control device (12, 112) is designed to recognize at least one of the following voice commands (14) from a user and to generate control signals (16) for controlling the woodworking machine (2) from the voice commands (14):
- Initial input and/or modification of setting parameters (26) of axes (28) of the woodworking machine (2), in particular of dimensional values of the axes (28),
- Actuation of a clamping tool (30) of the woodworking machine (2), in particular an electric clamping tool (30),
- Actuation of a compressed air supply means (32),
- Actuation of an extraction device (34),
- Releasing of a workpiece (10), in particular by disengaging a rip fence against which the workpiece rests (36),

6. Woodworking machine (2) according to one of the preceding claims,
wherein the woodworking machine (2) has a graphical user interface (38) and wherein the voice control device (12) is designed to recognize the following voice commands (14) from a user and to control the user interface (38) on the basis of the voice commands (14) as follows:
- Selection of and/or navigation within operating menus (40) displayed by means of the user interface (38),
- Voice control of a user support system (42), in particular a cutting optimization support system (42).

7. Woodworking machine (2) according to one of the preceding claims,
wherein the voice control device is designed to automatically set at least one stop and/or one machining parameter of the woodworking machine after voice input of an identifier for a material to be machined or a workpiece to be machined.

8. Woodworking machine (2) according to one of the preceding claims,
wherein the voice control device (12) is designed to issue recommendations for action (46) to the user,
in particular wherein the recommendations for action (46) comprise at least one of the following:
- Recommendations for action (48) concerning the workpiece (10) to be machined,
- Recommendations for action (50) concerning the operation of the woodworking machine (2),
- Instruction information (52), in particular concerning measures to increase work safety and/or the position of the workpiece (10).

9. Woodworking machine (2) according to one of the preceding claims,
wherein the voice control device (12) is designed to output recommendations for action (46) depending on one or more user states (54), wherein the user states (54) correlate in particular with a level of training of the users,
and/or
wherein the woodworking machine (2) is designed to detect an error state (56) and wherein the voice control device (12) is designed to issue instructions (20) to the user and/or process voice commands (14) from the user depending on the error state (56) and/or to process voice commands (14) from the user,
in particular wherein the instructions (20) comprise checking setting parameters (26), in particular a multi-step check of setting parameters (26) in the manner of a fault tree.

10. Woodworking machine (2) according to one of the preceding claims, wherein the voice control device (12) is designed to establish contact with a service technician.

11. Woodworking machine (102) according to one of the preceding claims,
wherein the woodworking machine (102) is designed as an edge banding machine (104), and the voice control device (112) is designed to recognize at least one of the following voice commands (114) from a user and to generate control signals (116) for controlling the edge banding machine (104) from the voice commands (114):
- Selection of an operating mode (162) of the edge banding machine (104), in particular glue pot and/or Airtronic operation, wherein the Airtronic operation in particular comprises a temperature selection,
- Setting of a joint milling thickness (164),
- setting an edge thickness (166),
- setting a workpiece height (168),
- individually switching individual milling cutters (170) of the edge banding machine (104) on and/or off,
- setting a milling depth (172) of the edge banding machine (104).

12. Woodworking machine (102) according to one of the preceding claims,
wherein the voice control device comprises a filter for filtering out background noise and/or has a learning ability to focus on voice commands from an individual user, for example by recognizing a voice pitch, voice tone, voice rhythm, or voice color, or a combination of these parameters,

13. Woodworking machine (102) according to one of the preceding claims,
wherein the voice control device is designed to make certain settings during processing.

14. Woodworking method, wherein
a woodworking machine (102) according to one of the preceding claims is used wherein a supplied workpiece (10) is machined by a tool (8, 108) of the woodworking machine (2, 102),
**characterized by** at least one voice control step (12, 112) in which a voice command (14, 114) from a user of the woodworking machine (2, 102) is received and processed and a control signal (16, 116) for controlling the woodworking machine (2, 102) is generated from the voice commands (14, 114),
and wherein the woodworking machine (2, 102) is controlled on the basis of the control signal (16, 116).

15. Use of a voice control system for controlling a
woodworking machine, in particular for setting a machining parameter or a position of a workpiece stop, on a woodworking machine according to any one of claims 1-13.

## Revendications

1. Machine à travailler le bois (2, 102), en particulier scie circulaire à format (4) ou machine de placage de chant (104), avec un outil d'usinage (8, 108), lequel sert à usiner une pièce (10) amenée à la machine à travailler le bois (2, 102), et un dispositif de commande vocale (12, 112), lequel est configuré pour traiter des commandes vocales (14, 114) d'un utilisateur de la machine à travailler le bois (2, 102) et pour générer, à partir des commandes vocales (14, 114), des signaux de commande (16, 116) destinés à commander la machine à travailler le bois (2, 102),
dans laquelle la machine à travailler le bois (2, 102) est configurée pour être commandée sur la base des signaux de commande (16, 116),
**caractérisée en ce que** le dispositif de commande vocale est conçu pour recevoir un signal d'outil, lequel signale le mouvement d'un outil d'usinage ou l'arrêt de l'outil d'usinage, et pour recevoir une commande vocale et comparer celle-ci à une première liste prédéterminée de commandes vocales, lorsque le signal d'outil signale un arrêt de l'outil d'usinage et pour la comparer à une deuxième liste prédéterminée de commandes vocales, lorsque le signal d'outil signale un mouvement de l'outil d'usinage et pour exécuter la commande vocale, lorsqu'une concordance entre la commande vocale reçue et la commande vocale prédéterminée de la première respectivement deuxième liste a été constatée.

2. Machine à travailler le bois (2) selon la revendication 1,
dans laquelle la machine à travailler le bois (2) est conçue sous forme de scie circulaire à format (4), laquelle comprend :
- une table porte-pièce (58) avec une surface de support de pièce (60) horizontale et une fente de sciage (62),
- un groupe de sciage avec une lame de scie circulaire (64), qui est agencée de manière à pouvoir dépasser de la fente de sciage (62),
- une butée de pièce (44) agencée de manière mobile au-dessus de la surface de support de pièce (60) pour le guidage latéral de la pièce (10).

3. Machine à travailler le bois (2) selon la revendication 1 ou 2,
dans laquelle le dispositif de commande vocale (12) présente un moyen d'émission (18), lequel est configuré pour émettre des instructions (20) à l'utilisateur.

4. Machine à travailler le bois (2) selon l'une quelconque des revendications précédentes,
dans laquelle le dispositif de commande vocale (12, 112) présente une interface de données (22), laquelle est configurée pour communiquer sans fil avec un appareil externe (24), en particulier avec un appareil audio externe (24), de manière monodirectionnelle et/ou bidirectionnelle,
en particulier dans laquelle l'interface de données (22) est configurée pour communiquer au moyen d'au moins un des standards de transmission de données ci-après :
- Bluetooth,
- réseau local sans fil (WLAN),
- Digital Enhanced Cordless Telecommunications (DECT).

5. Machine à travailler le bois (2) selon l'une quelconque des revendications précédentes,
dans laquelle le dispositif de commande vocale (12, 112) est configuré pour détecter au moins une des commandes vocales (14) ci-après d'un utilisateur et pour générer, à partir des commandes vocales (14), des signaux de commande (16) destinés à commander la machine à travailler le bois (2) :
- première entrée et/ou modification de paramètres de réglage (26) d'axes (28) de la machine à travailler le bois (2), en particulier de valeurs dimensionnelles des axes (28),
- actionnement d'un outil de serrage (30) de la machine à travailler le bois (2), en particulier d'un outil de serrage (30) électrique,
- actionnement d'un moyen de mise à disposition d'air comprimé (32),
- actionnement d'un moyen d'aspiration (34),
- exposition d'une pièce (10), en particulier par libération d'une butée parallèle, contre laquelle s'applique la pièce (36).

6. Machine à travailler le bois (2) selon l'une quelconque des revendications précédentes,
dans laquelle la machine à travailler le bois (2) présente une interface utilisateur graphique (38) et dans laquelle le dispositif de commande vocale (12) est configuré pour détecter les commandes vocales (14) ci-après d'un utilisateur et pour commander comme suit l'interface utilisateur (38) sur la base des commandes vocales (14) :
- sélection de et/ou navigation dans des menus de commande (40) représentés au moyen de l'interface utilisateur (38),
- commande vocale d'un système d'assistance à l'utilisateur (42), en particulier d'un système d'assistance à l'optimisation de la découpe (42).

7. Machine à travailler le bois (2) selon l'une quelconque des revendications précédentes,
dans laquelle le dispositif de commande vocale est configuré pour régler automatiquement au moins une butée et/ou un paramètre d'usinage de la machine à travailler le bois après l'entrée vocale d'un identifiant pour un matériau à usiner ou une pièce à usiner.

8. Machine à travailler le bois (2) selon l'une quelconque des revendications précédentes,
dans laquelle le dispositif de commande vocale (12) est configuré pour émettre des recommandations d'action (46) à l'utilisateur,
en particulier dans laquelle les recommandations d'action (46) comprennent au moins un des éléments ci-après :
- recommandations d'action (48) concernant la pièce (10) à usiner,
- recommandations d'action (50) concernant le fonctionnement de la machine à travailler le bois (2),
- informations de formation (52), en particulier concernant des mesures relatives à l'augmentation de la sécurité au travail et/ou à la position de la pièce (10).

9. Machine à travailler le bois (2) selon l'une quelconque des revendications précédentes,
dans laquelle le dispositif de commande vocale (12) est configuré pour émettre des recommandations d'action (46) en fonction d'un ou plusieurs états d'utilisateur (54), dans laquelle les états d'utilisateur (54) sont corrélés en particulier à un niveau de formation des utilisateurs,
et/ou,
dans laquelle la machine à travailler le bois (2) est configurée pour détecter un état d'erreur (56) et dans laquelle le dispositif de commande vocale (12) est configuré pour émettre des instructions (20) à l'utilisateur en fonction de l'état d'erreur (56) et/ou pour traiter des commandes vocales (14) de l'utilisateur,
en particulier dans laquelle les instructions (20) comprennent la vérification de paramètres de réglage (26), en particulier une vérification en plusieurs étapes de paramètres de réglage (26) à la manière d'un arbre de défaillances.

10. Machine à travailler le bois (2) selon l'une quelconque des revendications précédentes,
dans laquelle le dispositif de commande vocale (12) est configuré pour établir un contact avec un technicien de maintenance,

11. Machine à travailler le bois (102) selon l'une quelconque des revendications précédentes,
dans laquelle la machine à travailler le bois (102) est conçue sous forme de machine de placage de chant (104), et le dispositif de commande vocale (112) est configuré pour détecter au moins une des commandes vocales (114) ci-après d'un utilisateur et pour générer, à partir des commandes vocales (114), des signaux de commande (116) destinés à commander la machine de placage de chant (104) :
- sélection d'un mode de fonctionnement (162) de la machine de placage de chant (104), en particulier du mode cuve à colle et/ou Airtronic, dans laquelle le mode Airtronic comprend en particulier une sélection de température,
- réglage d'une épaisseur de fraise à dresser (164),
- réglage d'une épaisseur de chant (166),
- réglage d'une hauteur de pièce (168),
- activation et/ou désactivation personnalisées de différentes fraises (170) de la machine de placage de chant (104),
- réglage d'une épaisseur de fraise (172) de la machine de placage de chant (104).

12. Machine à travailler le bois (102) selon l'une quelconque des revendications précédentes,
dans laquelle le dispositif de commande vocale comprend un filtre destiné à filtrer des bruits de fond et/ou présente une capacité d'apprentissage pour la focalisation sur des commandes vocales d'un seul utilisateur, par exemple à l'aide d'une détection d'une tessiture, d'une hauteur vocale, d'un rythme vocal ou d'un timbre vocal ou d'une compilation de ces paramètres.

13. Machine à travailler le bois (102) selon l'une quelconque des revendications précédentes,
dans laquelle le dispositif de commande vocale est conçu pour procéder à des réglages déterminés pendant l'usinage.

14. Procédé de travail du bois dans lequel une machine à travailler le bois (102) selon l'une quelconque des revendications précédentes est utilisée, dans lequel une pièce (10) amenée est usinée avec un outil d'usinage (8, 108) de la machine à travailler le bois (2, 102),
**caractérisé par** au moins une étape de commande vocale (12, 112), dans laquelle une commande vocale (14, 114) d'un utilisateur de la machine à travailler le bois (2, 102) est reçue et traitée et un signal de commande (16, 116) destiné à commander la machine à travailler le bois (2, 102) est généré à partir des commandes vocales (14, 114), et dans lequel la machine à travailler le bois (2, 102) est commandée sur la base du signal de commande (16, 116).

15. Utilisation d'une commande vocale destinée à commander une machine à travailler le bois, en particulier destinée à régler un paramètre d'usinage ou une position d'une butée de pièce, au niveau d'une machine à travailler le bois selon l'une quelconque des revendications 1-13.
